# EUROPEAN PATENT APPLICATION

(11) **EP 1 293 491 A2**
(43) Date of publication of application: **19.03.2003**
(21) Application number: 02255903.3
(22) Date of filing: 23.08.2002
(51) Int. Cl.: C04B 33/04

(54) **A thin board of sintered product and its manufacturing method**

(30) Priority: 11.09.2001 JP 2001275457
(71) Applicant: Cerabo Japan Ltd., Nasu-gun, Tochigi-Ken 321-0532 (JP)
(72) Inventor: Maehara, Yoshio, c/o Cerabo Japan Ltd., Nasu-Gun, Tochigi-Ken 321-0532 (JP); Takahashi, Haruki, c/o Cerabo Japan Ltd., Nasu-Gun, Tochigi-Ken 321-0532 (JP)
(74) Representative: Fairbairn, Angus Chisholm

(57) **Abstract**

The present invention provides a large-scale thin board of sintered body (ceramic tile) with low water absorption and high frost-resistance. The manufacturing method comprises the steps of preparing the ingredients talc, vitrifying components such as feldspar and porcelain stone, low wollastonite which is a needle crystal mineral, and plastic clay as main components, then mixing fine particles of those materials, compacting into a thin board with the needle crystals oriented uniformly in one preferred direction, and burning at a temperature lower than that of crystal inversion of low wollastonite, in order to manufacture a highly frost-resistant large-scale thin ceramic board with a water absorption of 3% or less in an excellent product condition. It is further preferable to utilize low wollastonite which has undergone grading of grains by mixing short-fibre type and long-fibre type.

## Description

The present invention relates to a large-scale thin board of sintered product and its manufacturing method, the features of which are a low water absorption of 3% or less, high frost-resistance, and the possibility of being used in cold areas.

Thin-board-type sintered products (e.g. pottery tiles) are currently manufactured as exterior finishing materials for architecture, and such materials are usually exposed to the open air. Water expands when it freezes and, therefore, if the water absorbed in a sintered product freezes, in winter or at other times, the sintered product may suffer from cracks or breakage in the worst cases, i.e. the problem of frost damage. The larger the size of a thin board of sintered product becomes, the more the frost damage.

On the other hand, research on large-scale thin boards of sintered products has already been carried out for a certain period of time, and products as large as 1m (width) x 1m (length) x 5mm (thickness) have been launched onto the market. Moreover, even products more than 3 meters long have been known if their width is narrower. However, it is true that the wider and longer the thin board becomes, the more difficult the manufacturing process will be. One of the reasons for this is the influence of free silica (mostly quartz) included in feldspar used as a vitrifying component and in clay used for forming. Probably, the high thermal expansion coefficient of quartz causes differences in the temperature gradient during the burning and annealing processes of large-scale thin boards of sintered product, and this easily leads to internal warp and duntings. Moreover, it causes other problems in slowing down the burning speed and making the production efficiency extremely low.

To avoid such problems, materials such as cordierite and petalite could be chosen that would set the expansion coefficient lower. However, this is not practical, because those materials are so expensive that the boards could not be sold as mass-production products at reasonable market prices. Also, generally, those materials require a high burning temperature of 1200° Celsius or more, which easily leads to deformation by softening and sets dimensional accuracy low, because of their shrinkage rate of 10% or more.

To solve the problem, JP-A-2998072 is known as a technology of overcoming fragility and improving the elasticity of the board. The patent recommends forming a green ware body by making it uniformly contain β-CaO·SiO₂ (wollastonite, β-wollastonite), which is needle crystal mineral (fibrous crystal mineral), and also general pottery materials including talc and clay, with the needle crystal mineral oriented and aligned in one preferred direction, and to sinter it, so that elastic large-scale thin ceramic tiles (pottery boards) would be manufactured.

By the way, needle crystal mineral wollastonite is a low form which has been used in various other fields, and is widely utilised in the field of ceramics. In the case of making compounds porcelaneous, it is sintered at a high temperature of 1200° Celsius or more to obtain densification and low water absorption, and then the above-mentioned low form wollastonite inverts to the high form (pseudo-wollastonite) at around 1120~1130° Celsius making the important needle crystal change. Therefore, although it loses the effect of the needle crystal and becomes porcelaneous making densification proceed and water absorption get lower, softening deformation as well as internal warp occur, which easily leads to cracks and breakages, and thus makes it difficult to manufacture large-scale ceramic tiles. For that reason, conventionally, the burning temperature has been set at 1100° Celsius or lower to manufacture large-scale thin ceramic tiles with a water absorption of approximately 10%, wherein frost damage cannot be avoided, but only products of unsatisfactory quality are being made at present, and this is the problem which the present invention solves.

Thus, in order to solve the above-mentioned problem, we earnestly studied and consequently completed the present invention, considering that if burnt at a lower temperature than the temperature where needle crystals of low wollastonite will be inverted, that the reaction will be controlled, and that the needle crystals of low wollastonite will remain unchanged, so that by utilizing vitrifying components, even if burnt at a lower temperature than the inversion temperature of needle crystals of low wollastonite, densification (acquirement of low water absorption) will be made possible preventing dunts, further that firing shrinkage rate will be less, and finally that we will be able to manufacture large-scale ceramic boards which can be cut, are machinable and highly frost-resistant.

In one aspect, the present invention is a thin board of sintered product featuring low water absorption, manufactured through containing principal ingredients such as talc, vitrifying components, low wollastonite which is a needle crystal mineral, and plastic clay; compacting them into a thin board with the low wollastonite oriented and aligned uniformly in one preferred direction; and then burning it at a temperature lower than the crystal inversion temperature of low wollastonite.

In another aspect, the present invention is the manufacturing method for the thin board of sintered product featuring low water absorption, manufactured through containing principal ingredients such as talc, vitrifying components, low wollastonite which is a needle crystal mineral, and plastic clay; mixing, kneading and compacting them into a thin board with the low wollastonite oriented and aligned uniformly in one preferred direction; and then burning it at a temperature lower than the crystal inversion temperature of low wollastonite.

By carrying out the above-mentioned method, a thin dense board of large-scale sintered body (ceramic tile) of excellent quality can be manufactured, showing the low wollastonite without crystal inversion, and low water absorption.

This product features low absorption of 3% or less, and hereby it is possible to make it a highly frost-resistant thin board of sintered body, which can be used outdoors in cold areas without any problems.

This one can be said to feature the composition of talc in an amount of approximately 5~30%, vitrifying components in an amount of approximately 10~40%, low wollastonite in an amount of approximately 10~40%, and plastic clay in an amount of approximately 20~50% each by weight, and hereby it will be an excellent large-scale thin ceramic board.

Furthermore, hereinabove the low wollastonite features the fact that it is a mixture of long-fibre and short-fibre types, and by doing so, particle sizes of the low wollastonite will be well-balanced, a more stabilized reaction will occur, and it will be possible to mass-produce large-scale thin ceramic boards in excellent quality with a water absorption of less than 3%.

To carry out the present invention, the combination is of four principle ingredients, namely talc, vitrifying components such as feldspar and other pottery stones, low wollastonite and plastic clay. Talc not only improves compactibility, but also is essential for low-temperature fusion by an eutectic action with the vitrifying components, which will be mentioned later, and its recommended amount is approximately 5~30% by weight. Also, a particle size of 44µm (micrometers) or less is recommendable, and the centre of the particle size distribution should be approximately 5µm. The later-mentioned experiment result clearly shows that, without talc, not only is the compactibility poor, but also it is difficult for eutectic action to occur. Therefore, in order to obtain densification, a high temperature will be necessary, causing the problem of low wollastonite's crystal inversion. On the other hand, if too much talc is used, plasticity will be low and compactibility will be affected, because the talc contains only a little hydroxyl, and also non-crystalline silica generated in the reaction process tends to invert to cristobalite, which will tend to cause "duntings". Thus, this is not recommended.

Secondly, regarding the vitrifying components such as feldspar and other pottery stones, their usages need to be controlled according to how much alkaline ingredients (K₂O, Na₂O) they contain and according to their particle sizes. For the present invention, suitable vitrifying components are those containing approximately 3% or more alkalis, and also components containing approximately 80% or more of particles whose sizes are at least approximately 44µm or less, while the maximum particle size should be approximately 110µm or less.

A suitable amount of the vitrifying components to be combined, considering mutual reaction with talc, is approximately 10~40% by weight. The experiment sample to be mentioned later shows that, if no vitrifying components are used, then a radical reaction between clay and low wollastonite occurs with the talc working as a mineralizer, easily leading to softening deformation, and when large-scale ceramic boards are made, no use of vitrifiers causes internal warp and becomes one of the primary factors of warpage. Also, if the combination quantity of vitrifying components is increased, the effect of vitrification will be so strong that softening deformation will occur, and the shape-maintaining effect of low wollastonite will not function, so that, consequently, it will tend to be impossible to manufacture large-scale ceramic tiles.

When some percent by weight of feldspar that contains alkalis of 10% or more total content of alkaline ingredients, such as the above-mentioned K₂O and Na₂O, is added, it is possible to manufacture large-scale ceramic tiles at a lower burning temperature, as the experiment results to be mentioned later clearly show.

The low wollastonite is not only an essential ingredient to maintain the shape of the large-scale thin ceramic boards, but also an indispensable supplying source of calcium in order to obtain anorthite, which is the objective reaction product. The bigger the particle sizes (fibre length, aspect ratio) are, the more surely the shape-maintaining effect will be expected, but against this, if particle sizes are too big, the reactivity will decline and, therefore, an aspect ratio of 20 or less is suitable.

Furthermore, a suitable combination quantity of low wollastonite is in the range of 10~40% by weight, and the bigger the quantity becomes, the higher the temperature will be for densification, while reactivity will be so radical that manufacturing large-scale ceramic tiles will be difficult. Also, to decrease the burning temperature, it is recommended to combine less amount of low wollastonite, while from the viewpoint of preventing cracks and breakages and of maintaining the shape of product, it should be recommended to combine approximately 10% or more by weight of low wollastonite.

Last, regarding the plastic clay, the more clay minerals it contains, the less quantity of it should be combined, and thus combination quantity of approximately 20~50% by weight is suitable. If the amount is less than 20% by weight, when a green ware body is compacted with the needle crystals of low wollastonite oriented in one preferred direction, it will be short of plasticity during the processes of extrusion and rolling, and compacting will be difficult. On the other hand, if the amount of plastic clay is over 50% by weight, there will be another problem in that dehydration takes more time, decreasing productivity. Because combination amounts of other principal ingredients decrease, even if the compact is sintered at a lower temperature than the crystal inversion temperature of low wollastonite, another problem occurs so that satisfying products cannot be obtained.

The present invention is further illustrated by reference to following nonlimiting Examples and the accompanying drawings, in which:
Figure 1 is a table showing the combination and the product condition of Compounds Nos. I~XI;
Figure 2 is a graph chart showing the relations between water absorptions and burning temperatures of Compounds Nos. I~III;
Figure 3 is a graph chart showing the relations between water absorptions and burning temperatures of Compounds Nos. IV~VII;
Figure 4 is a graph chart showing the relations between water absorptions and burning temperatures of Compounds Nos. VIII~XI;
Figure 5 is a table showing physical values of Compounds Nos. IV and X;
Figure 6 is a table showing particle size distribution of low wollastonite;
Figure 7 is a table showing particle size distribution of long- and short-fibre wollastonites;
Figure 8 is a table showing combinations of Compounds Nos. X, XII~XIV;
Figure 9 is a graph chart showing the relations between water absorptions and burning temperatures of Compounds Nos. X, XII~XIV;
Figure 10 is a table showing physical values of the burnt products of Compounds Nos. XII and X;
Figure 11 is a table showing dimensional differences between right and left sides of Compounds Nos. XII and X; and
Figure 12 is a graph chart showing the relations between absorptions (the horizontal axis) regarding Compounds Nos. X, XII, XIII and XIV and inclinations of the graph lines (the vertical axis) presented in Figure 9.

### EXAMPLES:

### [Experiment Sample 1]

An experiment sample is explained as follows:

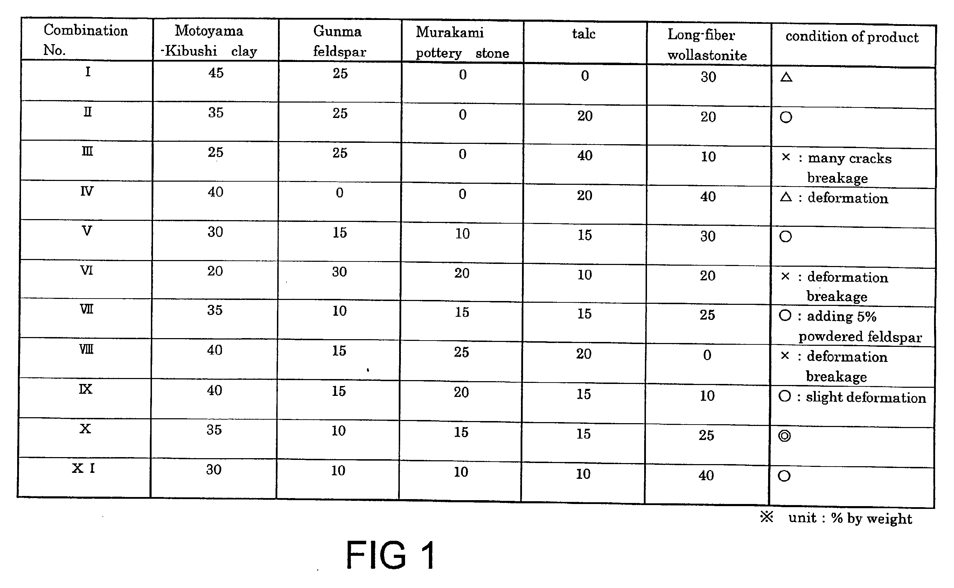

First, according the quantities (unit: percentage by weight) shown in the table of Figure 1, we combined talc, Gunma feldspar and Murakami pottery stone as vitrifying components, long-fibre wollastonite (aspect ratio 20 or less, main fibre length 210µm), and Motoyma-Kibushi clay as plastic clay each in fine particles. After mixing and stirring the combined particles in a mixmuller for 15 minutes, we added to it 20% of water with the water weight included, and we kneaded it into a body. Then, we extruded it using a de-airing pug-mill, such as the one presented in JP-A-2998072, rolled it in order with a four-stage rolling mill, and cut it into a dough sheet of approximately 950 x 1895 x 5.3 mm. We dried the dough sheet in a roller hearth kiln and then burnt it. Gradually, we raised the temperature and burnt the sheet until the water absorption reached 2.5% to obtain test pieces of approximately 900 x 1800 mm.

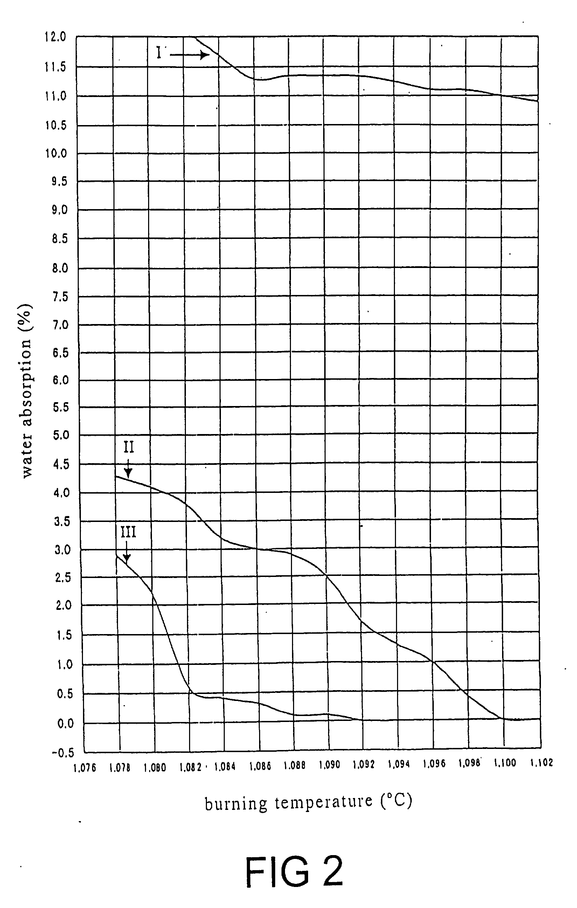

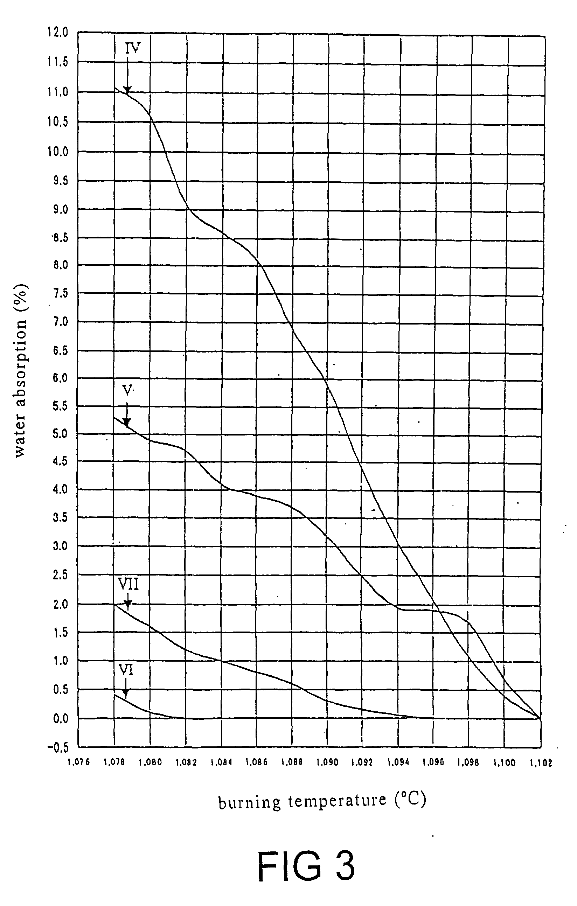

As a result, Compounds Nos. II, V, VII, IX, X and XI (all of them manufactured in accordance with the present invention) were in a good product condition, while the rest of the test pieces, namely Compound No. I without talc, Compound No. III with 40% of talc by weight, Compound No. IV without vitrifying components, Compound No. V with 50% of vitrifying components by weight and Compound No. VIII without wollastonite were all in a bad condition. Incidentally, the graph charts presented in Figures 2, 3 and 4 show how the water absorption of Compounds Nos. I~XI changed, when the burning temperature was variably raised. One of these graphs shows that Compound No. VII, in which was added 5% of finely powdered feldspar with more than 10% of alkaline components in it, obtained a water absorption of 2.5% at a temperature lower than 1078° Celsius, and that it is confirmed that a large-scale ceramic board can be made with it.

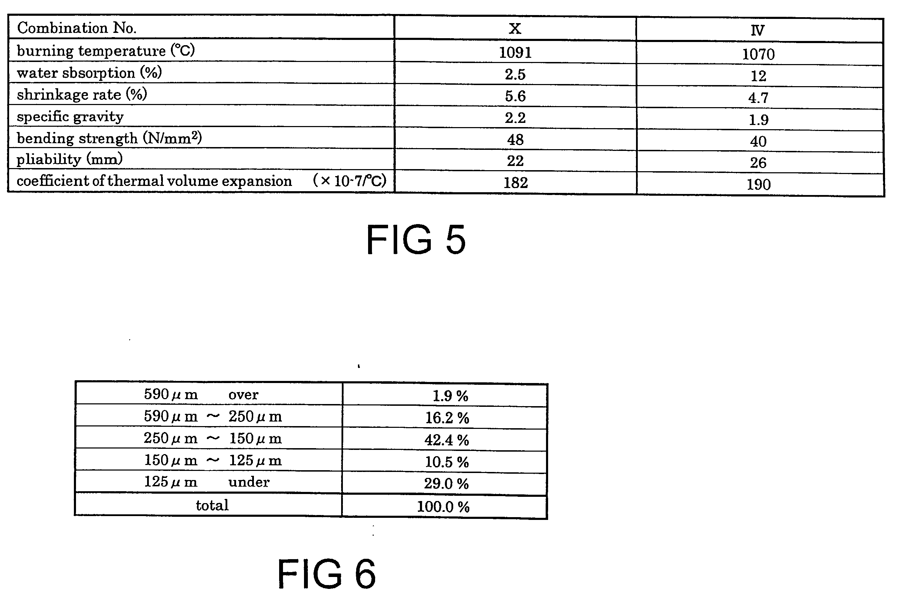

Moreover, the table in Figure 5 shows the physical properties of Compounds Nos. X and IV. Regarding Compound No. X processed in accordance with the present invention, its burning temperature was set at 1091° Celsius, and the test piece had thickness of 4.3 mm being in an excellent product condition. Also, if Compound No. IV is burnt at the same burning temperature, softening deformation will occur, so we researched its physical properties regarding the test piece burnt at a lowered temperature of 1070° Celsius, where it can maintain its shape. According to this, Compound No. X processed with the present invention had a lower absorption of 2.5% and excellent frost-resistance, but showed high bending strength of 48N/mm². Besides, it had specific gravity of 2.2, which means that it is light, so that it is highly usable, and because of its shrinkage rate of 5.6%, it is comparatively easy to realize dimensional precision. On the other hand, the product of Compound No. IV had a high absorption of 12% and low frost-resistance, and further showed bending strength of 40N/mm², which is lower than that of the product processed in accordance with the present invention. Moreover, as we operated x-ray analysis on Compounds Nos. IV and X, it was confirmed that both of them had crystalline peaks of low wollastonite in them, though their strengths of crystalline peaks were different. According to this fact, Compound No. X which was processed with the present invention has low absorption of 2.5%, but the wollastonite has not had crystalline inversion, and still exists as in needle state (fibrous state), and so as a result presented the above-mentioned excellent physical properties.

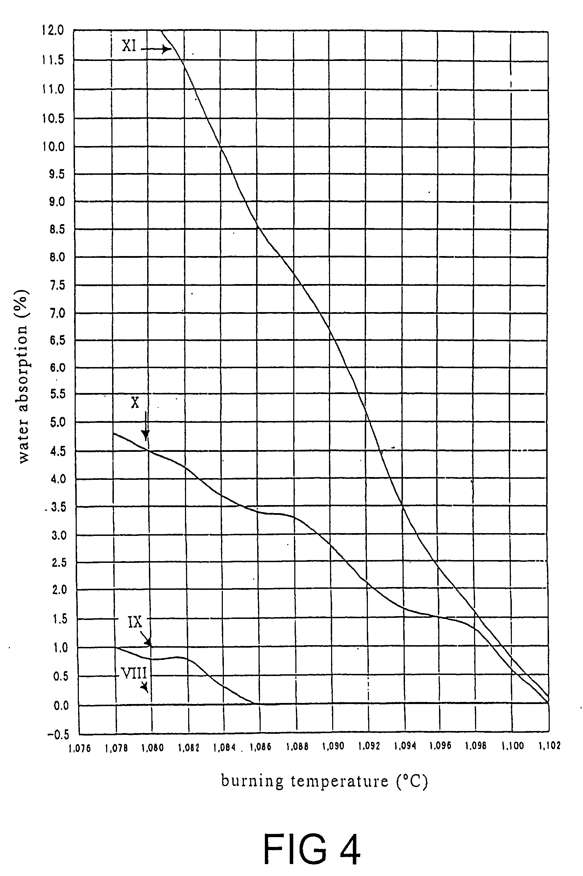

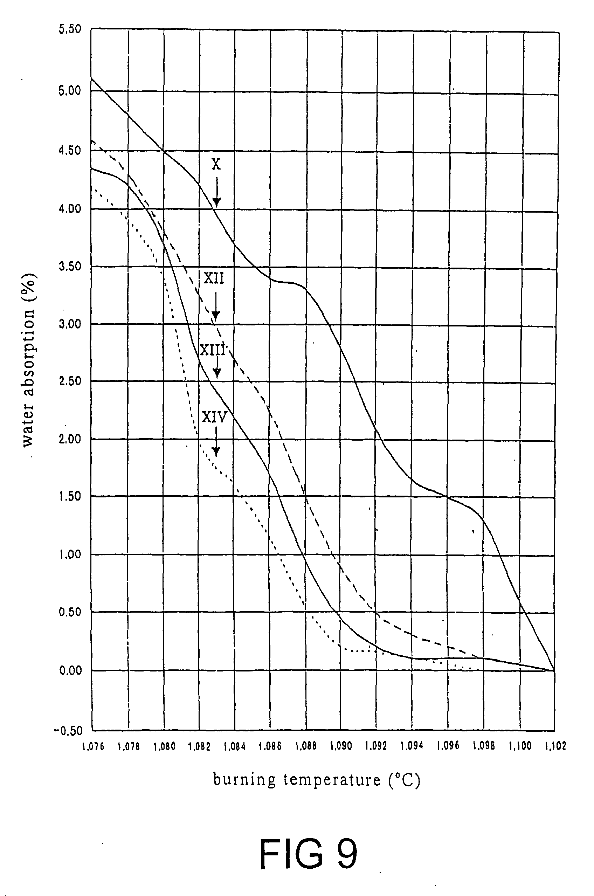

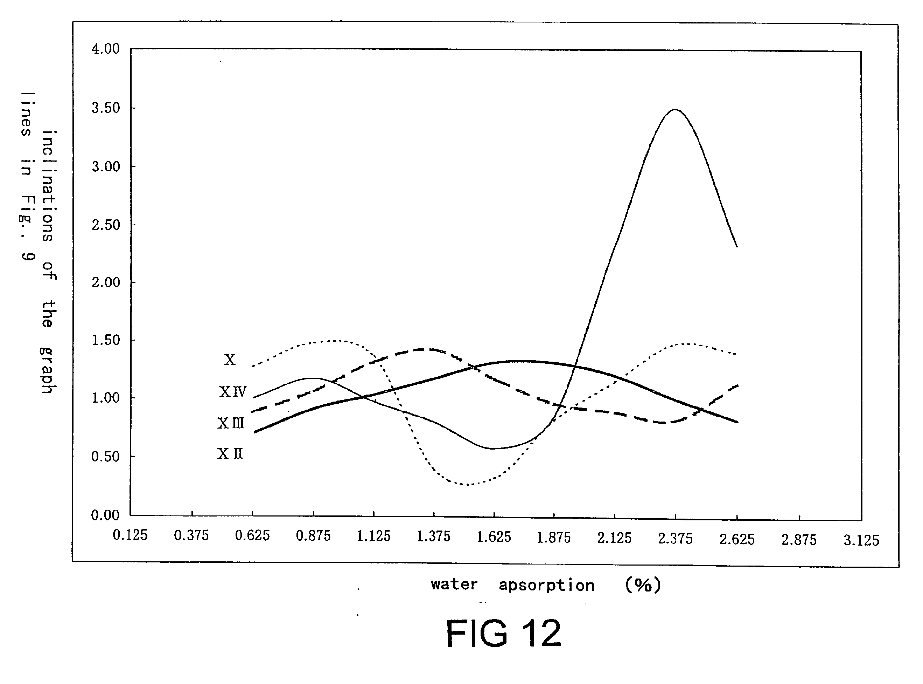

Next, we paid attention to the relation between burning temperature and water absorption, that is to say, densification. When one observes the relation between burning temperature and water absorption regarding the above-mentioned Compound No. X, it will be found that at two places, namely 1088° Celsius and 1098° Celsius, the graph line descends steeply showing that it is not in direct proportion (a straight line). The graph chart in Figure 12 shows the relation between the absorption of Compound No. X (the horizontal axis) and the inclination (the vertical axis) of the graph line in Figure 4 (the same one as that of Compound No. X presented in Figure 9), wherein the line shows big curves as well, and thus it is presumed that the reaction progresses drastically in the above-mentioned temperature ranges. These temperature ranges are close to the crystal inversion temperature of wollastonite, and therefore, it is to be regarded that internal energy of the reaction was excited, so that its reactivity was raised. And this reactivity is closely related to the particle size (surface area), that is, the larger the surface area is, the higher the reactivity is. Thus, we measured the particle size (length) distribution of the utilized wollastonite, and the result was as in the table of Figure 6. Thus, it may be seen that at 1088° Celsius mainly particles shorter than 125µm are reactive, and at 1098° Celsius particles of 150µm~250µm.

Incidentally, we added glass powder to Motoyama-Kibushi clay and low wollastonite which had been adopted in the sample experiment, wherein the combination was glass powder 35% by weight, Motoyama-Kibushi clay 40% by weight, low wollastonite 25% by weight, and then, after rolling it into a dough sheet similarly, we dehydrated and sintered it to get a comparative sample of a different combination. The burning temperature of this comparative sample was 1080° Celsius, its shrinkage rate was 5.1%, and its absorption was 3.4%. However, this product suffered from dehydration cracks and duntings. Meanwhile, we practiced x-ray analysis, and peaks of cristobalite were observed. Though by utilizing glass powder it is possible to sinter at a lower temperature, it is presumed that under the influence of the reactivity of glass powder non-crystalline silica in liquid phase inverted to cristobalite. And it is observed that the existence of this cristobalite causes a sharp variation in thermal expansion around 200° Celsius, which leads to a decrease in thermal shock resistance as well as a development of duntings, and consequently it is safe to say that it is difficult to produce a large-scale thin ceramic board utilizing glass powder. On the other hand, it is considered that owing to eutectic operation, the present invention decreases the sintering temperature and maintains the fibrous situation of the low wollastonite, so that the generated liquid phase including plenty of crystalline phase moderates thermal shock and makes the production of large-scale thin ceramic boards possible.

### [Experiment Sample 2]

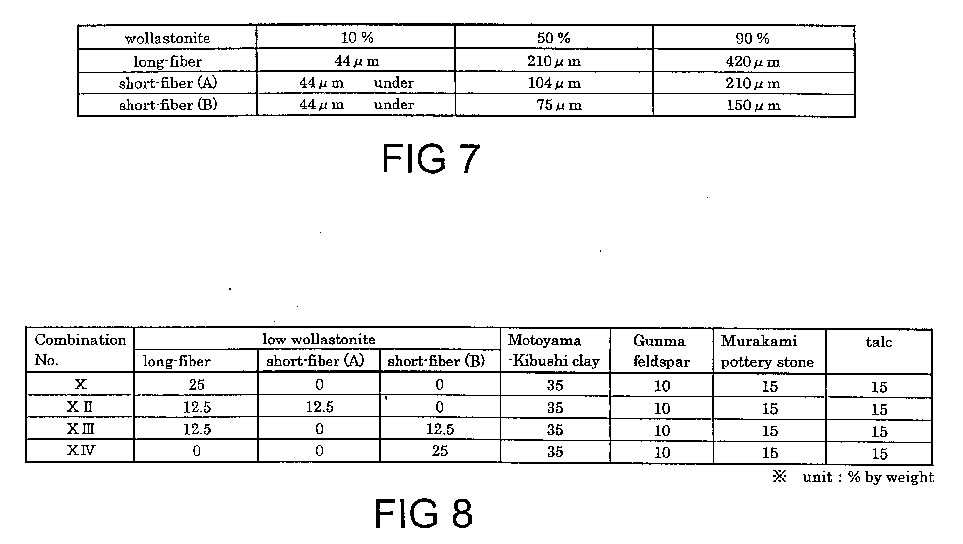

Thus next, we graded grains of low wollastonite combining the long-fibre type and the short-fibre type which had been used in Compound No. X, and tried to stabilize its reaction. As the table in Figure 7, we prepared two kinds of short-fibre wollastonites (A) and (B), combined them according to the ratios described in Figure 8 (Compounds Nos. XII, XIII and XIV), mixed and kneaded them as in the sample experiment 1, and made them into bodies. And in the same way, we extruded the bodies using a de-airing pug-mill, then rolled them through a four-stage rolling mill one by one, made them into dough sheets of the same size as mentioned above, and after dehydration and burning we gained test pieces in the size of approximately 900 x 1800 mm.

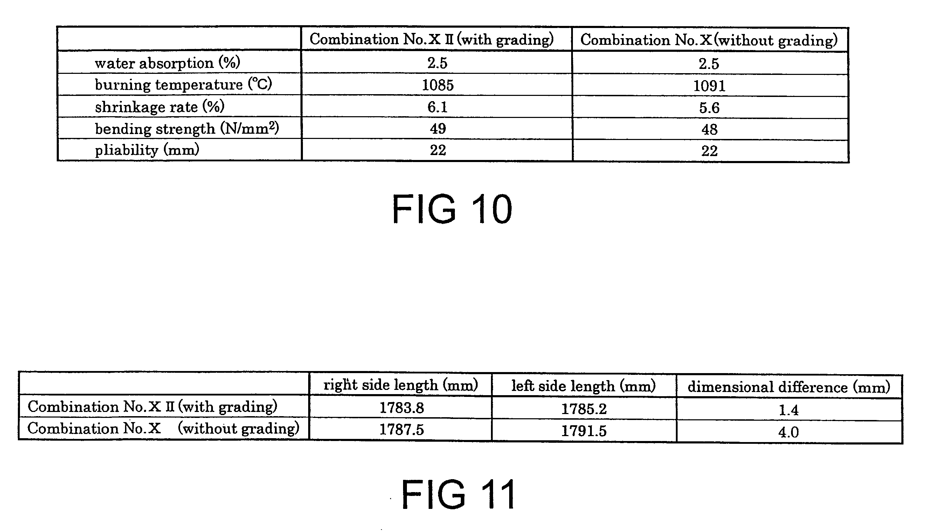

These did not have any cracks, nor duntings as in the case of Compound No. X, and almost no warpage could be found, thus the external appearances of the products were excellent. Figure 9 shows changing relations between burning temperatures and water absorptions. According to this graph chart, the relation between burning temperature and water absorption of Compound No. XII was close to approximate direct proportion, while the low wollastonite which has undergone grading of grains with short fibres can achieve water absorption of 3% or less at a lower burning temperature, compared to the one which has only long fibres (Compound No. X). This means that by utilizing short-fibre wollastonite, compounds can be burnt at a lower temperature than the crystal inversion temperature, and that it is possible to produce stable ceramic boards without crystal inversion. Furthermore, Figure 12 shows the relations between absorptions regarding Compounds Nos. X, XII, XIII and XIV (the horizontal axis) and inclinations of the graph lines (the vertical axis) presented in Figure 9, where the lines of Compounds Nos. XII and XIII indicate changes closer to a straight line, thus meaning stable reactions. And also, regarding Compound No. XIV into which only short-fibre type was combined, there is a tendency that the burning temperature becomes lower, owing to its particle sizes, but it is observed that its reactivity is not controlled similar to the one into which only long fibres were combined (Compound No. X). And further, the table in Figure 10 shows physical values of Compounds Nos. X and XII of which absorption was set to be 2.5%. From this result it was made clear that though it has a lower burning temperature, Compound No. XII has the same physical values as Compound No. X with a higher burning temperature, and this fact led to a decrease of burning temperature. Moreover, the table in Figure 11 shows the results of comparison, where in the direction of 1800mm sides, that is longer sides of the boards of Compounds Nos. X and XII, their dimensional differences between right and left were compared, and according to the table, it is observed that Compound No. X has a dimensional difference of 4.0mm, while Compound No. XII has a difference of no more than 1.4mm. As a result of this, it is presumed that as far as wollastonite with grain grading is concerned, a good balance of particle size could be achieved and its stability was increased.

## Claims

1. A method of manufacturing a thin board of sintered product featuring low water absorption, comprising mixing talc, vitrifying components, low wollastonite which is needle crystal mineral, and plastic clay as principal ingredients, kneading and compacting the mixture into a thin board with the low wollastonite oriented and aligned uniformly in one preferred direction, and then burning at a temperature lower than the crystal inversion temperature of low wollastonite.

2. A method according to claim 1, wherein the principal ingredients are talc in an amount of 5~30%, vitrifying components in an amount of 10~40%, low wollastonite in an amount of 10~40%, and plastic clay in an amount of 20~50%, each by weight.

3. A method according to claim 1 or claim 2, wherein the low wollastonite ingredient comprises a mixture of long-fibre type and short-fibre type low wollastonite.

4. A method according to any of claims 1 to 3, wherein the thin board is burnt to provide a water absorption of 3% or less.

5. A thin board of sintered product featuring a low water absorption, comprising talc, vitrifying components, uninverted low wollastonite which is a needle crystal mineral, and plastic clay as principal components, wherein the low wollastonite is oriented and aligned uniformly in one preferred direction.

6. A thin board of sintered product according to claim 5, wherein the principal components are talc in an amount of 5~30%, vitrifying components in an amount of 10~40%, low wollastonite in an amount of 10~40%, and plastic clay in an amount of 20~50%, each by weight.

7. A thin board of sintered product according to claim 5 or claim 6, wherein the low wollastonite component comprises a mixture of long-fibre type and short-fibre type low wollastonite.

8. A thin board of sintered product according to any of claims 5 to 7, wherein the water absorption is 3% or less.

9. A thin board of sintered product according to claim 5, obtainable by a method according to any of claims 1 to 4.
